(19) Europäisches Patentamt

European Patent Office

Office européen des brevets

(11) Veröffentlichungsnummer: **0 270 042 B1**

(12) **EUROPÄISCHE PATENTSCHRIFT**

(45) Veröffentlichungstag der Patentschrift: **24.06.92**

(21) Anmeldenummer: **87117626.9**

(22) Anmeldetag: **28.11.87**

(51) Int. Cl.⁵: **G01N 21/03**, B01L 3/00, B01F 13/08

(54) **Reaktionsgefäss.**

(30) Priorität: **02.12.86 DE 3641093**

(43) Veröffentlichungstag der Anmeldung:
**08.06.88 Patentblatt 88/23**

(45) Bekanntmachung des Hinweises auf die
Patenterteilung:
**24.06.92 Patentblatt 92/26**

(84) Benannte Vertragsstaaten:
**AT BE CH DE ES FR GB IT LI NL SE**

(56) Entgegenhaltungen:
**DE-A- 2 028 620**
**FR-A- 1 573 224**
**US-A- 3 480 399**

(73) Patentinhaber: **HOECHST AKTIENGESELL-**
**SCHAFT**
**Postfach 80 03 20**
**W-6230 Frankturt am Main 80(DE)**

(72) Erfinder: **Gross, Jürgen, Dr.**
**Frankturter Strasse 4**
**W-6238 Hofheim am Taunus(DE)**
Erfinder: **Wilmes, Hugo**
**In den Eichen 87**
**W-6237 Liederbach(DE)**

EP 0 270 042 B1

Rank Xerox (UK) Business Services

## Beschreibung

Die Erfindung betrifft ein Reaktionsgefäß in Form einer Küvette mit quadertörmigem Hohlraum für optische Untersuchungen kleiner Flüssigkeitsmengen, dessen Boden mit einer kreisförmigen Vertiefung zur Aufnahme eines horizontal angeordneten Magnetrührers versehen ist.

Bei schnellen chemischen Reaktionen, wie z.B. Antigen-Antikörper-Reaktionen für diagnostische Zwecke, hängt das quantitative Ergebnis der Reaktion oft von der raschen Durchmischung der Reaktionsteilnehmer ab.

Nach der US-A-34 80 399 ist ein Reaktionsbehälter mit quaderförmigen Hohlräumen bekannt, deren Bodenwände mit einer zylindrischen Aussparung zur Aufnahme eines Magnetrührers versehen sind.
Nach der DE-A-20 28 620 ist ein Behälter mit Rührwerk für Flüssigkeiten bekannt, bei dem der Magnetrührer im Boden des Behälters gelagert ist.

Nachteilig bei den bekannten Vorrichtungen ist, daß Totzonen vorhanden sind, deren Inhalt nur allmählich ausgetauscht wird. Hier will die Erfindung Abhilfe schaffen.

Die Aufgabe wird durch ein Reaktionsgefäß gelöst, bei dem die kreisförmige Vertiefung bogenförmig verlaufende Kanäle aufweist, die sich von der Vertiefung zu den Wänden und/oder den Ecken des Reaktionsgefäßes hin erstrecken.

Die Erfindung wird im folgenden an Hand von lediglich einen Ausführungsweg darstellenden Zeichnungen näher erläutert.

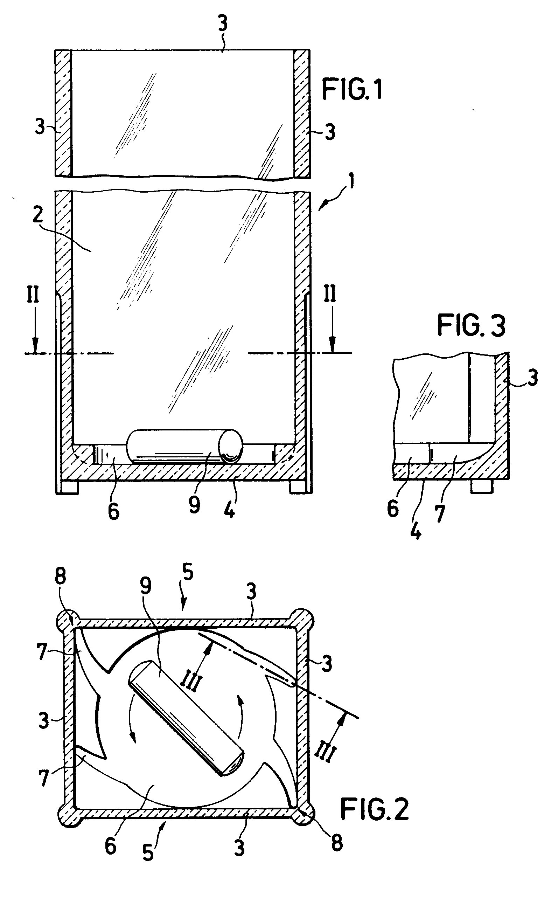

Es zeigt
Figur 1 das Reaktionsgefäß in Seitenansicht geschnitten,
Figur 2 den Schnitt II-II von Figur 1 und
Figur 3 den Schnitt III-III von Figur 2.

Das Reaktionsgefäß 1 in Form einer Küvette mit quaderförmigem Hohlraum 2 besteht aus vier Wänden 3 und einem Boden 4, von den vier Wänden weisen zwei gegenüber liegende parallel zueinanderstehende optische Fenster 5 auf. Der Boden 4 ist mit einer kreisförmigen Vertiefung 6 versehen, in der ein schlanker zylinderförmiger Körper 9, vorzugsweise aus ferromagnetischem Material, liegend und beweglich angeordnet ist. Die Länge des Körpers 9 ist geringer als der Durchmesser der kreisförmigen Vertiefung, sein Durchmesser ist höchstens doppelt so groß wie die Tiefe der Vertiefung 6. Ferner weist der Boden 4 bogenförmig verlaufende Kanäle 7 auf, die sich von der Vertiefung 6 zu den Wänden 3 und/oder den Ecken 8 des Reaktionsgefäßes hin erstrecken.

Durch den sich drehenden Zylinder 9, also durch den Rührer wird Flüssigkeit aus dem Randbereich ins Zentrum des Reaktionsgefäßes gesaugt. Hierdurch wird die Durchmischung ebenfalls beschleunigt.

## Patentansprüche

1. Reaktionsgefäß in Form einer Küvette für optische Untersuchungen kleiner Flüssigkeitsmengen, dessen Boden mit einer kreisförmigen Vertiefung zur Aufnahme eines horizontal angeordneten Magnetrührers versehen ist, dadurch gekennzeichnet, daß die kreisförmige Vertiefung (6), bogenförmig verlaufende Kanäle (7) aufweist, die sich von der Vertiefung (6) zu den Wänden (3) und/oder Ecken (8) des Reaktionsgefäßes hin erstrecken.

## Claims

1. A reaction vessel in the form of a cell for optical investigations of small quantities of liquid, the floor of which reaction vessel is provided with a circular depression for receiving a horizontally arranged magnetic stirrer, wherein the circular depression (6) exhibits arcuately extending channels (7), which extend from the depression (6) to the walls (3) and/or corners (8) of the reaction vessel.

## Revendications

1. Récipient à réaction en forme de cuvette pour des examens optiques de petites quantités de liquide, dont le fond comporte un renfoncement circulaire destiné à loger un agitateur magnétique disposé horizontalement, caractérisé en ce que le renfoncement circulaire (6) possède des canaux (7) en forme d'arcs de cercle, qui s'étendent depuis le renfoncement (6) jusqu'aux parois (3) et/ou aux angles (8) du récipient à réaction.

FIG.1

FIG.3

FIG.2